(19) **Europäisches Patentamt**
**European Patent Office**
**Office européen des brevets**

(11) **EP 2 487 891 B1**

(12) **EUROPÄISCHE PATENTSCHRIFT**

(45) Veröffentlichungstag und Bekanntmachung des Hinweises auf die Patenterteilung:
**05.09.2018 Patentblatt 2018/36**

(51) Int Cl.:
**H04M 9/08** *(2006.01)*

(21) Anmeldenummer: **11001140.0**

(22) Anmeldetag: **11.02.2011**

(54) **Vermeiden eines akustischen Echos bei Vollduplexsystemen**

Prevention of an acoustic echo in full duplex systems

Suppression de l'écho acoustique dans des systèmes Full-Duplex

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**15.08.2012 Patentblatt 2012/33**

(73) Patentinhaber: **Deutsche Telekom AG**
**53113 Bonn (DE)**

(72) Erfinder:
• **Buchner, Herbert**
**10785 Berlin (DE)**
• **Helwani, Karim**
**10829 Berlin (DE)**
• **Spors, Sascha**
**10243 Berlin (DE)**

(74) Vertreter: **Vossius & Partner**
**Patentanwälte Rechtsanwälte mbB**
**Siebertstrasse 3**
**81675 München (DE)**

(56) Entgegenhaltungen:
**EP-A1- 1 845 699     WO-A1-00/72567**
**WO-A1-99/53673**

## Beschreibung

### Technisches Gebiet

Die Erfindung betrifft ein Verfahren zum Vermeiden eines akustischen Echos bei Vollduplexsystemen mit einem vielkanaligen Audiowiedergabesystem sowie eine Vorrichtung zum Vermeiden eines akustischen Echos bei Vollduplexsystemen insbesondere mit einem erfindungsgemäßen Verfahren.

### Stand der Technik

Vollduplexkommunikation in Freisprecheinrichtungen wie beispielsweise in Telekonferenzsystemen benötigt üblicherweise akustische Echokompensation. Dabei wird häufig von einem fernen Senderaum in einen lokalen Konferenzraum beziehungsweise in einen nahen Raum ein mehrkanaliges Audiosignal beziehungsweise akustisches Signal mittels P Lautsprecherkanälen übertragen (Signale $x_1$, ..., $x_P$). Im lokalen Konferenzraum wird dann das Audiosignal von einer Anzahl P Lautsprechern ausgegeben. Gleichzeitig werden im lokalen Konferenzraum beziehungsweise im nahen Raum von den Lautsprechern und lokalen Sprechern Mikrofonsignale $y_1$, ..., $y_Q$ mittels Mikrofonen aufgenommen, die in einer Anzahl Q im lokalen Konferenzraum vorhanden sind.

Um bei Vollduplexsystemen eine Rückkopplung der aus dem fernen Senderaum kommenden Lautsprechersignale über die Mikrofone des lokalen Konferenzraums zurück zum fernen Senderaum oder beispielsweise zu einem automatischen Spracherkennungssystem oder etwas ähnlichem zu verhindern, werden durch einen akustischen Echokompensator die PxQ akustischen Signalpfade des lokalen Konferenzraums beziehungsweise nahen Raums beispielsweise mittels eines adaptiven MIMO-Filters (Multiple-Input and Multiple-Output) nachgebildet. Dabei werden die nachgebildeten Echos von den aufgenommenen Mikrofonsignalen $y_1$, ..., $y_Q$ subtrahiert. Üblicherweise wird bei derartigen adaptiven Systemen von Impulsantworten mit endlicher zeitlicher Ausdehnung ausgegangen (FIR, engl. Finite Impulse Response), da bei diesen während der Adaption Stabilität gewährleistet ist.

Bei einer derartigen mehrkanaligen adaptiven Filterung gibt es zwei wesentliche bekannte Probleme: Einerseits ist die Rechenkomplexität aufgrund der Systemstruktur relativ hoch, da $P \times Q$ Signalpfade mittels jeweils mehreren tausend Filterkoeffizienten adaptiv nachgebildet werden müssen. Andererseits ist die Adaption bei zueinander korrelierten Eingangssignalen des adaptiven Filters in vielen Anwendungsfällen aus numerischen Gründen problematisch. Bei der akustischen Echokompensation ergeben sich beispielsweise die korrelierten Eingangsignale dadurch, dass die Lautsprechersignale meist von nur wenigen unabhängigen Quellen im fernen Raum stammen. Bei einer Koeffizientenoptimierung durch Minimierung der quadratischen Fehlerleistungen also beim sogenannten Least-Squares Problem weist daher die sich ergebende sogenannte Normalgleichung eine schlecht konditionierte Korrelationsmatrix auf, so dass zu deren iterativer Lösung im allgemeinen sehr rechenintensive Algorithmen benötigt werden, wie beispielsweise der in [1] im Kapitel Literatur auf Seite 14 beschriebene Recursive Least-Squares (RLS)-Algorithmus.

Um diese Probleme teilweise zu beheben, wird der Einsatz von adaptiver Filterung in geeigneten Signaltransformationsbereichen vorgeschlagen. Bisherige in der Literatur beschriebene adaptive Ansätze in Transformationsbereichen basieren hauptsächlich auf zeitlichen Transformationen auf den einzelnen Signalkanälen. Beispielsweise ist in [2] ein "Frequency-Domain Adaptive Filtering" (FDAF) für den Mehrkanalfall zusammenfassend dargestellt. Beim FDAF wird im Wesentlichen die FIR-Struktur der einzelnen einkanaligen Teilsysteme ausgenutzt, so dass mit bekannten, zeitlich konstanten Transformationen, insbesondere der diskreten Fourier-Transformation (DFT) gearbeitet werden kann. Dies bewirkt sowohl einen Komplexitätsgewinn bei den Filteroperationen der einkanaligen Teilsysteme, als auch eine Verbesserung der numerischen Eigenschaften bei der Adaption.

Zusätzlich zur effizienten Adaption der Kompensationsfilter wurden in der Literatur verschiedene Vorverarbeitungsverfahren zur Modifikation der Lautsprechersignale vorgeschlagen, die die Signale der unterschiedlichen Kanäle teilweise voneinander dekorrelieren wie beispielsweise in [4] und in [5] beschrieben. Eine wesentliche Einschränkung dieser Verfahren besteht jedoch in der Anforderung, dass die Signalmodifikationen für den menschlichen Hörer in den meisten Anwendungen nicht wahrnehmbar sein dürfen. Hierbei hat sich wie in [5] gezeigt eine psychoakustisch motivierte Phasenmodulation der einzelnen Wiedergabekanäle für typische Surroundsound-Anordnungen mit beispielsweise fünf Kanälen als besonders effizient erwiesen.

Eine Erweiterung der bestehenden Vorverarbeitungsverfahren zur Signaldekorrelation auf Mehrkanalsysteme beziehungsweise Vielkanalsysteme wie beispielsweise bei einer Wellenfeldsynthese erscheint jedoch aufgrund der veränderten psychoakustischen Gegebenheiten nicht ohne Weiteres möglich. Insbesondere im unteren Frequenzbereich von beispielsweise etwa unter zwei Kilohertz (kHz) sollte wie beispielsweise in [5] beschrieben möglichst weitgehend auf eine Phasenmodifikation verzichtet werden. Vielkanalige Audiowiedergabesysteme wie beispielsweise die Wellenfeldsynthese werden zudem üblicherweise so dimensioniert, dass ihre räumliche Aliasingfrequenz mit diesem psychoakustisch vorgegebenen Frequenzbereich von etwa zwei kHz übereinstimmt.

Die WO 00/72567 A1 offenbart ein Verfahren zur akustischen Mehrfachkanal-Echokompensation, das auf Systeme anwendbar ist, die ein räumliches Mehrfachkanal-Signal aus einem monophonen Signal ableiten, wobei jeder Kanal auf ein entsprechendes Element einer Reihe von Lautsprechern mit unterschiedlichen Verstärkungen angewendet wird, um die wahrnehmbare oder hörbare Illusion einer Richtung zu erzeugen.

Die WO 99/53673 A1 bezieht sich auf ein Telefonkonferenz System mit einer Konferenzbrücke, die eine Vielkanalverbindung zu jedem Anwendergerät aufweist, wobei das Anwendergerät Mittel hat, um jeden Kanal separat zu verarbeiten, um einen Ausgang zu erzeugen, der jeden der anderen Teilnehmer darstellt.

In der EP 1 845 699 A1 wird ein Audiosignal-Dekorrelator beschrieben, um ein Audioausgangssignal von einem Audioeingangssignal abzuleiten, der einen Frequenzanalysator zum Extrahieren eines ersten Teilsignals und eines zweiten Teilsignals aus dem Eingangsaudiosignal aufweist, wobei das erste Teilsignal einen Audioinhalt in einem ersten Frequenzbereich und das zweite Teilsignal einen Audioinhalt in einem zweiten Audiofrequenzbereich darstellt.

Der vorliegenden Erfindung liegt daher die Aufgabe zu Grunde, ein Verfahren und eine Vorrichtung vorzuschlagen, mit denen das akustische Echoproblem insbesondere unterhalb einer bestimmten Frequenz wie der räumlichen Aliasingfrequenz bei Vollduplexsystemen mit vielkanaliger Schallwiedergabe vermindert werden kann.

Darstellung der Erfindung

Die Aufgabe wird erfindungsgemäß durch ein Verfahren gelöst, wie es im unabhängigen Anspruch 1 definiert ist, sowie durch eine Vorrichtung, wie sie im unabhängigen Anspruch 8 definiert ist. Vorteilhafte Ausführungsvarianten des erfindungsgemäßen Verfahrens und der erfindungsgemäßen Vorrichtung ergeben sich aus den abhängigen Ansprüchen.

Vollduplexsysteme der genannten Art können insbesondere in Freisprecheinrichtungen wie beispielsweise Telekonferenzsystemen verwendet werden. Unter Aufnahmesystem kann in diesem Zusammenhang eine Einrichtung zur Aufnahme beziehungsweise Erfassung von akustischen Signalen beziehungsweise Audiosignalen verstanden werden und insbesondere ein oder mehrere Mikrofone. Zum Erzeugen des Wellenfeld kann eine Wiedergabeeinrichtung beziehungsweise das vielkanalige Audiowiedergabesystem verwendet werden, worunter eine Einrichtung zum Wiedergeben von akustischen Signalen beziehungsweise von Audiosignalen verstanden werden kann und insbesondere ein oder mehrere Lautsprecher. Vielkanalig kann sich in diesem Zusammenhang auf eine Übertragung von akustischen Signalen über mehrere Kanäle wie beispielsweise Mikrofonkanäle und/oder Lautsprecherkanäle beziehen. Der ferne Raum kann beispielsweise ein Senderaum sein und der nahe Raum ein lokaler Konferenzraum. Mittels des erzeugten Wellenfelds kann ein Höreindruck im nahen Raum hervorgerufen werden, wobei unter Höreindruck ein akustischer Eindruck einer Person verstanden wird, der ihr im nahen Raum vermittelt wird. Die bestimmte Zone beziehungsweise bestimmte Richtung bezieht sich in diesem Zusammenhang auf einen Bereich des nahen Raums, in dem das Wellenfeld unterdrückt ist. Das Anordnen des mindestens einen Aufnahmesystems in der bestimmten Zone und/oder der bestimmten Richtung kann so erfolgen, dass das Aufnahmesystem positioniert wird, nachdem die bestimmte Zone beziehungsweise bestimmte Richtung im Wellenfeld erzeugt beziehungsweise definiert wurde. Alternativ dazu kann die bestimmte Zone beziehungsweise bestimmte Richtung im Wellenfeld so erzeugt oder definiert werden, dass das bereits positionierte Aufnahmesystem in der bestimmten Zone und/oder der bestimmten Richtung angeordnet ist.

Das erfindungsgemäße Verfahren ermöglicht ein Vermindern des akustischen Echoproblems insbesondere unterhalb einer räumlichen Aliasingfrequenz bei dem Vollduplexsystem mit vielkanaliger Audiowiedergabe. Die räumlicher Aliasingfrequenz steht in Beziehung zur Anordnung des Audiowiedergabesystems und beispielsweise zur Anordnung von Lautsprechern im nahen Raum. In einem einfachen Beispiel einer solchen Anordnung kann die räumliche Aliasingfrequenz mittels der Formel

$$f_{alias} = \frac{c}{2\Delta x \cdot \sin(|\varphi|)}$$

.

berechnet werden, wobei c die Schallgeschwindigkeit, $\varphi$ der Einfallswinkel des Primärschalls und $\Delta x$ = der Abstand der Lautsprecher ist. Insbesondere ermöglicht das Definieren der bestimmten Zone beziehungsweise der bestimmten Richtung mit unterdrücktem Wellenfeld im nahen Raum im erfindungsgemäßen Verfahren, dass beim Aufnahmesystem im nahen Raum Schallwellen des vielkanaligen Audiowiedergabesystems vermindert beziehungsweise im Wesentlichen eliminiert sind. Dadurch kann erreicht werden, dass eine Echounterdrückung nicht mehr benötigt wird oder dass diese zumindest wesentlich vereinfacht werden kann.

Vorzugsweise werden die Quellensignale bandbegrenzt und/oder die Pfade der Lautsprechersignale zu dem Aufnahmesystem identifiziert, wobei die Mischmatrix so definiert wird, dass die Spektralanteile der Quellensignale unterhalb der räumlichen Aliasingfrequenz des Audiowiedergabesystems in der bestimmten Zone und/oder der bestimmten Richtung unterdrückt werden. Auf diese Weise kann die Güte der Unterdrückung des Schallfeldes beziehungsweise des Wellenfeld in der bestimmten Zone beziehungsweise in der bestimmten Richtung beeinflusst werden. Insbesondere kann diese Güte von der räumlichen Aliasingfrequenz des Wiedergabesystems und der Grenzfrequenz des wiedergegebenen Materials beziehungsweise der wiedergegebenen Quellensignale oder der Wiedergabesignale abhängen, weil nur die Spektralanteile des wiedergegebenen Materials, die unterhalb der räumlichen Aliasingfrequenz des Systems gezielt unterdrückt werden können, so dass die Bandbegrenzung beziehungsweise die Identifikation der Pfade von den Lautsprechern zu dem Aufnahmesystem vorteilhaft sein kann.

Bevorzugt weist das Audiowiedergabesystem eine Anordnung mit vielen Lautsprechern auf und mittels der Mischmatrix werden die bestimmten Lautsprechersignale derart abgebildet, dass das erzeugte Wellenfeld in der bestimmten Zone und/oder der bestimmten Richtung unterdrückt wird. Viele Lautsprecher kann sich in diesem Zusammenhang insbesondere auf eine Mehrzahl von also zwei oder mehr Lautsprecher beziehen. In einer solchen Anordnung mit vielen Lautsprechern kann mittels des Verfahrens auf effiziente Weise das akustische Echo vermieden werden. Dabei wird die Mischmatrix vorzugsweise so definiert, dass das erzeugte Wellenfeld in der bestimmten Zone und/oder der bestimmten Richtung Nullstellen aufweist. Mittels Definition über solche Nullstellen kann eine einfache effiziente Verminderung beziehungsweise Unterdrückung des Wellenfelds ermöglicht werden. Dabei werden bei einer ersten bevorzugten Ausführungsform die Nullstellen über einen analytischen Ausdruck für ein Wunschwellenfeld bestimmt. Insbesondere kann dies ein analytischer Ausdruck sein, wie er beispielsweise in [7] beschrieben ist. In [7] wird insbesondere ein Verfahren vorgeschlagen, mit dem physikalisch prototypische (elementare) Quellen wie beispielsweise Punktquellen und Linienquellen synthetisiert werden. Hierbei geht man davon aus, einen analytischen Ausdruck für die Ausbreitungsfunktion zu besitzen, d.h. die Green'sche Funktion zu kennen. Die Ansteuerungsfunktion der Sekundärquellen im räumlichen Frequenzbereich ist dann gerade gegeben durch die Division des gewünschten elementaren Wellenfeldes durch die Green'sche Funktion. Eine Rücktransformation des Divisionsergebnisses in den räumlichen Bereich liefert die Ansteuerungsfunktion der Sekundärquellen. Im diskreten Fall kann eine Sekundärquelle ein Lautsprecher sein. In einer alternativen zweiten bevorzugten Ausführungsform werden die Nullstellen über ein numerisches Verfahren bestimmt, wobei vorzugsweise das numerische Verfahren der Nulllenkungsmethode oder der akustischen Kontraststeuerung entspricht. Die akustische Kontraststeuerung ist beispielsweise in [8] beschrieben, wobei darin die Autoren das gestellte Problem als Optimierungsproblem über die zwei folgenden Kostenfunktionen fassen. Die erste Kostenfunktion ist definiert über das Verhältnis der Energie im "hellen" also nicht stillen Wiedergabebereich zur Gesamtenergie des akustischen Wellenfeldes und die zweite Kostenfunktion ist der Kontrast zwischen der Ruhezone und des hellen Wiedegabebereichs. In einer alternativen dritten bevorzugten Ausführungsform werden die Nullstellen über fokussierte Quellensignale bestimmt. Wie beispielsweise in [9] beschrieben, ist die Idee dieser Ausführungsform, mit Hilfe von fokussierten Quellen ein Wellenfeld zu synthetisieren, das dem zu unterdrückenden Wellenfeld in einem bestimmten Bereich, gegenphasig ist.

Vorzugsweise werden die Spektralanteile der Quellensignale oberhalb der räumlichen Alisasingfrequenz mit einem Verfahren zur mehrkanaligen Echokompensation verarbeitet. Dieses Verarbeiten oberhalb der Aliasingfrequenz kann insbesondere dem Definieren der Mischmatrix nachgeschaltet sein und kann beispielsweise mit der psychoakustisch motivierten Vorverarbeitung nach [5] implementiert sein. Auf diese Weise kann die Verminderung des Echos im Vollduplexsystem über das Mehrkanalsystem verbessert werden.

Bevorzugt werden die Lautsprechersignale oberhalb der räumlichen Aliasingfrequenz mittels Phasenmodulation dekorreliert. In den dekorrelierten Lautsprechersignalen können dann beispielsweise über Verwendung eines Multichannel Frequency-Domain Adaptive Filtering (MC-FDAF) Algorithmus, wie er in [2] beschrieben ist, Echopfade identifiziert werden. Damit kann eine effiziente Verminderung des Echos ermöglicht werden.

Zusammenfassend basiert die Erfindung auf folgenden Grundgedanken:

Verfahren der mehrkanaligen akustischen Wiedergabesysteme verwenden typischerweise eine vordefinierte Mischmatrix, die die Quellensignale auf die bestimmten Lautsprechersignale beziehungsweise Wiedergabesignale abbildet, um einen gewünschten Höreindruck hervorzurufen. Diese Wiedergabeverfahren bieten Möglichkeiten zur Unterdrückung des Wellenfeldes in einem Bereich beziehungsweise in einer bestimmten Zone. Wenn solche Bereiche so positioniert werden, dass sie mit der Lage des Aufnahmesystems übereinstimmen, wird die Echounterdrückung nicht mehr benötigt beziehungsweise erheblich vereinfacht. Die Unterdrückung des Wellenfeldes kann durch eine geeignete Bestimmung der Wiedergabesignale beziehungsweise Lautsprechersignale erfolgen. Ausgangspunkt dieser Berechnung kann dabei wie in [7] beschrieben ein analytischer Ausdruck für das Wellenfeld beziehungsweise Wunschwellenfeld sein. Aber auch numerische Verfahren, wie die Null-Steering-Methode oder acoustic contrast control wie in [8] beschrieben können verwendet werden, um Nullstellen in der bestimmten Richtung beziehungsweise in der bestimmtem Zone zu erzielen. Weitere Verfahren können auch durch Zuhilfenahme von fokusierten Quellen die gewünschten Nullstellen schaffen.

Die Güte der Unterdrückung des Schallfeldes im Bereich beziehungsweise in der bestimmten Zone beziehungsweise der bestimmten Richtung hängt von der räumlichen Aliasingfrequenz des Wiedergabesystems und der Grenzfrequenz des wiedergegebenen Materials beziehungsweise der wiedergegebenen Quellensignale ab, weil nur die Spektralanteile des wiedergegebenen Materials, die unterhalb der Aliasingfrequenz des Systems gezielt unterdrückt werden können. Deswegen ist entweder eine Bandbegrenzung notwendig oder es müssen die Pfade von den Lautsprechern zu dem Aufnahmesystem identifiziert werden.

Oberhalb der Aliasingfrequenz kann bei Bedarf ein bekanntes mehrkanaliges Echokompensationsverfahren eingesetzt werden. In Kombination mit einer zeitlichen Vorverarbeitung wie beispielsweise in [4] und/oder [5] beschrieben im oberen Frequenzbereich, kann das erfindungsgemäße Verfahren auch als eine raum-zeitliche Verallgemeinerung der Vorverarbeitung interpretiert werden. In einer bevorzugten Ausführungsform werden die Lautsprechersignale oberhalb der Aliasingfrequenz mittels der Phasenmodulation nach [5] dekorreliert. Der MC-FDAF Algorithmus kann dann beispielsweise verwendet werden um die Echopfade zu identifizieren

Ein anderer Aspekt der Erfindung betrifft eine Vorrichtung zum Vermeiden eines akustischen Echos bei Vollduplexsystemen mit einem vielkanaligen Audiowiedergabesystem, einer Vorverarbeitungseinrichtung, mit der eine Mischmatrix definierbar ist, die Quellensignale aus einem fernen Raum auf bestimmte Lautsprechersignale derart abbildet, dass ein Wellenfeld in einem nahen Raum erzeugt wird, wobei das Wellenfeld in mindestens einer bestimmten Zone und/oder mindestens einer bestimmten Richtung im nahen Raum unterdrückt wird, und mindestens einem Aufnahmesystem, das in der bestimmten Zone und/oder der bestimmten Richtung angeordnet ist. Die Vorverarbeitungseinrichtung kann dabei als räumliche Vorverarbeitungseinrichtung zur räumlichen Modifikation des Wellenfeldes, um ruhige Zonen zu schaffen, ausgestaltet sein, die einer zeitlichen Vorverarbeitungseinrichtung zur zumindest teilweisen Dekorrelation wie beispielsweise oben und/oder unten beschrieben vorgeschaltet sein kann. Sie kann auch als raum-zeitliche Vorverarbeitungseinrichtung ausgestaltet sein, die einer Kombination einer solchen räumlichen Vorverarbeitungseinrichtung und einer solchen zeitlichen Vorverarbeitungseinrichtung entspricht. Ebenfalls kann die Vorverarbeitungseinrichtung einen Syntheseoperator wie beispielsweise Wellenfeldsynthese (WFS) oder Higher-Order Ambisonics (HOA) beziehungsweise akustische Aufnahmepfade im fernen Raum umfassen. Unter HOA können im Allgemeinen verschiedene Ansätze zur Audiowiedergabe subsumiert werden. Insbesondere kann bei HOA die Herleitung der Ansteuerungsfunktionen durch explizite Lösung des zugrunde liegenden physikalischen Problems der Wiedergabe eines gewünschten akustischen Feldes mithilfe einer Lautsprecherzeile von bestimmter Geometrie erfolgen. Dazu werden die Lautsprecher als eine kontinuierliche Verteilung von Monopolen betrachtet, die mit einer Gewichtungsfunktion belegt sind. Die aus diesem Ansatz folgende Integralgleichung kann durch die Darstellung der relevanten akustischen Felder in Form von sphärischen Harmonischen gelöst werden. Die kontinuierliche Verteilung von Monopolen kann auch durch eine räumlich diskrete Verteilung von Lautsprechern realisiert werden. Sphärische Harmonische, auch Kugeloberflächenfunktionen genannt, kann sich in diesem Zusammenhang wie beispielsweise in [10] beschrieben auf einen vollständigen Satz von orthogonalen Funktionen beziehen, die den Winkelanteil der Laplacegleichung in Kugelkoordinaten lösen.

Mit einer solchen erfindungsgemäßen Vorrichtung kann insbesondere das erfindungsgemäße Verfahren auf verhältnismäßig einfache Weise implementiert werden, so dass die oben beschriebenen vorteilhaften Effekte erreicht werden können.

Das vielkanalige Audiowiedergabesystem weist in der Praxis eine räumliche Aliasingfrequenz auf, und die Vorrichtung umfasst vorzugsweise eine Einrichtung zur Bandbegrenzung der Quellensignale und/oder eine Einrichtung zum Identifizieren der Pfade der Lautsprechersignale zu dem Aufnahmesystem, wobei die Vorverarbeitungseinrichtung so ausgestaltet ist, dass die Mischmatrix so definierbar ist, dass die Spektralanteile der Quellensignale unterhalb der räumlichen Aliasingfrequenz in der bestimmten Zone und/oder der bestimmten Richtung unterdrückt werden. Bevorzugt weist das Audiowiedergabesystem eine Anordnung mit vielen Lautsprechern auf und mittels der Vorverarbeitungseinrichtung werden die bestimmten Lautsprechersignale derart abgebildet, dass das erzeugte Wellenfeld in der bestimmten Zone und/oder der bestimmten Richtung unterdrückt wird. Vorzugsweise ist die Vorverarbeitungseinrichtung derart ausgestaltet, dass die Mischmatrix so definierbar ist, dass das erzeugte Wellenfeld in der bestimmten Zone und/oder der bestimmten Richtung Nullstellen aufweist, wobei die Nullstellen vorzugsweise mit einem Verfahren wie oben beschrieben bestimmt werden. Bevorzugt umfasst die Vorrichtung eine Einrichtung zur mehrkanaligen Echokompensation mit der die Spektralanteile der Quellensignale oberhalb der räumlichen Alisasingfrequenz verarbeitet werden. Vorzugsweise umfasst die Vorrichtung weiter eine Einrichtung zum Dekorrelieren der Lautsprechersignale oberhalb der räumlichen Aliasingfrequenz mittels Phasenmodulation.

Mittels der beschriebenen Ausführungsformen der erfindungsgemäßen Vorrichtung können die bevorzugten Ausgestaltungen des erfindungsgemäßen Verfahrens auf effiziente Weise implementiert werden und deren vorteilhafte Effekte erzeugt werden.

Kurze Beschreibung der Zeichnungen

Im Folgenden werden das erfindungsgemäße Verfahren und die erfindungsgemäße Vorrichtung unter Bezugnahme auf die beigefügten Zeichnungen anhand von Ausführungsbeispielen detaillierter beschrieben. Es zeigen:

Fig. 1      eine schematische Ansicht eines Ausführungsbeispiels einer erfindungsgemäßen Vorrichtung zum Vermeiden eines akustischen Echos bei einem Vollduplexsystem mit einem vielkanaligen Audiowiedergabesystem mittels eines Ausführungsbeispiels eines erfindungsgemäßen Verfahrens; und

Fig. 2      eine Visualisierung eines mit der erfindungsgemäßen Vorrichtung beziehungsweise mit dem erfindungsgemäßen Verfahren wiedergegebenen Schallfelds als bestimmtes Wellenfeld.

Weg(e) zur Ausführung der Erfindung

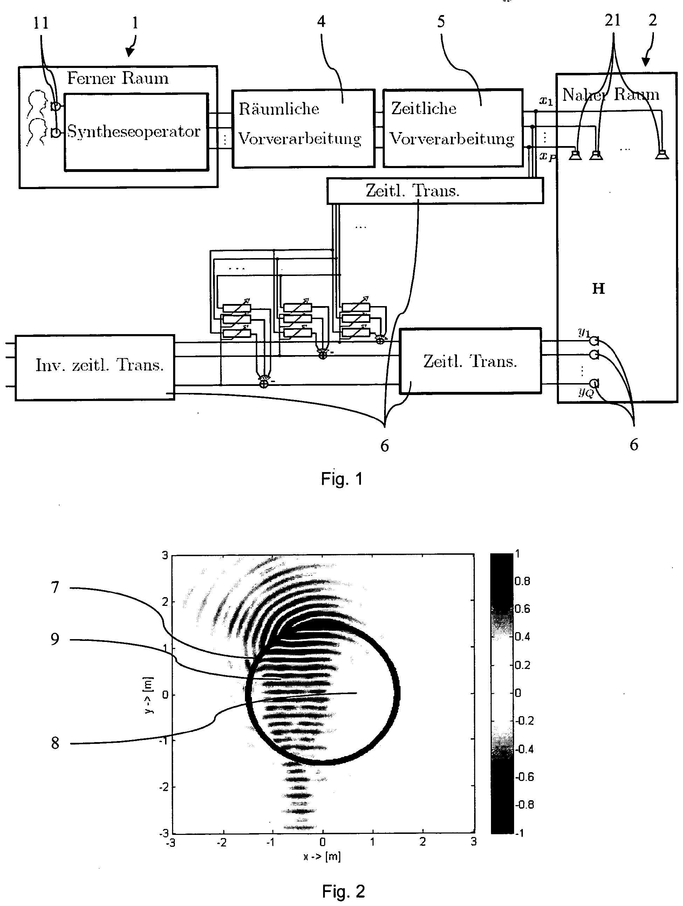

In der Fig. 1 ist ein Ausführungsbeispiel einer erfindungsgemäßen Vorrichtung zum Durchführen eines Ausführungsbeispiels eines erfindungsgemäßen Verfahrens gezeigt. In einem fernen Raum 1 sind mehrere Mikrofone 11 angeordnet und in einem nahen Raum 2 eine Anzahl P Lautsprecher 21 als Audiowiedergabesystem. Die Mikrofone 11 im fernen Raum 1 erfassen mehrere Quellensignale beziehungsweise ein mehrkanaliges Audiosignal, die über einen Syntheseoperator 3 einer räumlichen Vorverarbeitung 4 als Vorverarbeitungseinrichtung zugeführt werden. Der Syntheseoperator 3 kann beispielsweise zur Wellenfeldsynthese (WFS) oder Higher-Order Ambisonics (HOA) ausgestaltet sein. In der räumlichen Vorverarbeitung 4 wird das zu erzeugende Wellenfeld räumlich modifiziert, um eine bestimmte Zone im nahen Raum als ruhige Zone zu schaffen. Dabei werden die Quellensignale in einer Mischmatrix auf die Anzahl P Wiedergabesignale $x_1$ ..., $x_P$ abgebildet. Der räumlichen Vorverarbeitung 4 ist eine zeitliche Vorverarbeitung 5 nachgeschaltet, in der die Wiedergabesignale $x_1$ bis xp zur akustischen Echoauflösung (AEC) wie beispielsweise Phasenmodifikation teilweise dekorreliert werden. Die Wiedergabesignale $x_1$ ..., $x_P$ erzeugen dann mittels der Lautsprecher 21 ein Schallwellenfeld als Wellenfeld im nahen Raum 2. Ebenfalls im nahen Raum 2 sind eine Anzahl Q Mikrofone 22 angeordnet, mit denen akustische Signale im nahen Raum 2 erfasst werden können. In der in der Fig. 1 gezeigten Anordnung wird also das mehrkanalige Audiosignal beziehungsweise akustische Signal im fernen Raum 1 erfasst und dann in den nahen Raum 2 übertragen. Im nahen Raum 2 wird das mehrkanalige Audiosignal von der Anzahl P Lautsprechern 21 als Lautsprechersignale ausgegeben. Gleichzeitig werden im nahen Raum 2 Mikrofonsignale $y_1$, ..., $y_Q$ mittels der Anzahl Q Mikrofone 22 aufgenommen. Die Anzahl Q Mikrofone 22 sind dabei so im nahen Raum 2 positioniert, dass sie in der ruhigen Zone angeordnet sind, wenn das Wellenfeld von den Lautsprechern erzeugt wird. Somit kann bewirkt werden, dass im Wesentlichen nur im nahen Raum 2 erzeugte Signale und keine im fernen Raum 1 erzeugten Signale von den Q Mikrofonen 22 aufgezeichnet werden, wodurch ein Echoeffekt verhindert beziehungsweise eingeschränkt werden kann.

Um bei einer Vollduplexkommunikation eine Rückkopplung der im fernen Raum 1 erzeugten und im nahen Raum 2 wiedergegebenen Lautsprechersignale über die Mikrofone 22 des nahen Raums 2 zurück zum fernen Raum 1 zusätzlich zu verhindern, werden durch einen akustischen Echokompensator 6 die PxQ akustischen Signalpfade des lokalen Konferenzraums beziehungsweise nahen Raums beispielsweise mittels eines adaptiven MIMO-Filters (Multiple-Input and Multiple-Output) nachgebildet und vorzugsweise zeitlich transformiert beziehungsweise invers zeitlich transformiert. Dabei werden die nachgebildeten Echos von den aufgenommenen Mikrofonsignalen $y_1$, ..., $y_Q$ subtrahiert.

Fig. 2 zeigt ein mit der erfindungsgemäßen Vorrichtung beziehungsweise nach dem erfindungsgemäßen Verfahren wiedergegebenes Schallfeld als Wellenfeld. Insbesondere zeigt sie den normierten Realteil der wiedergegebenen Schalldruckwellen und ist somit einheitslos. Ein üblicher Schalldruck kann beispielsweise etwa 40 dB also etwa 2,000 Mikropascal sein. Der dicke schwarze Ring 7 in Fig. 2 repräsentiert die Lautsprecher 21 im nahen Raum 2. Das gewünschte Wellenfeld ist eine ebene Welle 9, die links wiedergegeben ist. Rechts im kleinen Ring in Fig. 2 sieht man die bestimmte Zone 8, in der die Schallwellen unterdrückt werden und in der die Mikrofone 22 des nahen Raums 2 angeordnet sind.

Das in der mittels der Fig. beschriebenen Vorrichtung implementierte erfindungsgemäße Verfahren besteht pro Iteration aus folgenden Verarbeitungsschritten:

Als erstes wird eine frequenzselektive Bestimmung der Mischmatrix auf der Wiedergabeseite ausgehend von dem gewünschten Wellenfeld, der Lage des Aufnahmesystems beziehungsweise der Mikrofone 22 und der Geometrie des Wiedergabesystems beziehungsweise der Lautsprecher 21 durchgeführt. Dabei ist als ein mögliches Anwendungsbeispiel ein zirkuläres Lautsprecherarray gewählt. In der Abhörzone ist ein virtuelles stilles kreisförmiges Gebiet 8 als Bereich mit verminderten Schallwellen angestrebt. In dem dazu komplementären Gebiet 9 findet eine konventionelle Wiedergabe ebener Wellen basierend auf dem Verfahren der Higher-Order Ambisionics (HOA) statt. In der stillen beziehungsweise bestimmten Zone 8, in der sich die Mikrofone 22 beziehungsweise das Aufnahmesystem befindet, wird das Wellenfeld wie in [6] beschrieben unterdrückt. Die Steuerfunktionen im Spektralbereich werden so bestimmt, dass die höheren Moden die niedrigeren in einem vordefinierten Bereich, in dem sich das Aufnahmesystem beziehungsweise die Mikrofone 22 befinden, auslöschen. Wie in [6] gezeigt resultiert diese Überlegung in ein Gleichungssystem. Dieses ist oft schlecht konditioniert. Eine Lösung wird deswegen durch Minimierung des quadratischen Fehlers angestrebt. Die Wahl der Anzahl der hohen Moden, die verwendet werden können, um niedrigere auszulöschen, hängt von der Frequenz ab. Die Anzahl der Moden N, die notwendig sind, ein monochromatisches Signal der Frequenz f, räumlich korrekt in einem Gebiet mit dem Radius R, wiederzugeben, ist proportional zu k*R, wobei k=2*pi*f/c.

Als zweites wird oberhalb der Aliasingfrequenz des Systems eine Vorverarbeitung der Lautsprechersignale vorgesehen, um das Mehrdeutigkeitsproblem zu umgehen. Vorzugsweise wird das in [5] beschriebene Verfahren verwendet.

Als drittes erfolgt die Identifizierung des akustischen Systems oberhalb der Aliasingfrequenz zum Beispiel gemäß dem MC-FDAF-Algorithmus wie in [2] beschrieben oder dem TDAF wie in [3] beschrieben.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang der folgenden Ansprüche zu verlassen. Insbesondere umfasst die Erfindung ebenfalls Ausführungsformen mit jeglicher Kombination von Merkmalen, die vorstehend oder nachfolgend zu verschiedenen Ausführungsformen genannt oder gezeigt sind.

Die Erfindung umfasst ebenfalls einzelne Merkmale in den Figuren auch wenn sie dort im Zusammenhang mit anderen Merkmalen gezeigt sind und/oder vorstehend oder nachfolgend nicht genannt sind. Auch können in den Figuren und der Beschreibung beschriebenen Alternativen von Ausführungsformen und einzelne Alternativen deren Merkmale vom Erfindungsgegenstand ausgeschlossen sein.

Im Weiteren schließt der Ausdruck "umfassen" und Ableitungen davon andere Elemente oder Schritte nicht aus. Ebenfalls schließt der unbestimmte Artikel "ein" bzw. "eine" und Ableitungen davon eine Vielzahl nicht aus. Die Funktionen mehrerer in den Ansprüchen aufgeführter Merkmale können durch eine Einheit erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert.

Das erfindungsgemäße Verfahren kann insbesondere ein computerimplementiertes Verfahren sein, das beispielsweise als Computerprogramm implementiert ist. Ein solches Computerprogramm kann auf einem geeigneten Medium gespeichert sein und/oder vertrieben werden, wie beispielsweise auf einem optischen Speichermedium oder einem Festmedium, das zusammen mit oder als Teil von anderer Hardware bereitgestellt wird. Es kann auch in anderer Form vertrieben werden, wie beispielsweise über das Internet oder andere verkabelte oder unverkabelte Telekommunikationssysteme. Insbesondere kann ein Computerprogramm beispielsweise ein auf einem computerlesbaren Medium gespeichertes Computerprogrammprodukt sein, das dazu ausgestaltet ist, ausgeführt zu werden, um ein Verfahren zu implementieren, insbesondere das erfindungsgemäße Verfahren. Alle Bezugszeichen in den Ansprüchen sind nicht als den Umfang der Ansprüche einschränkend zu verstehen.

Literatur

[1] S. Haykin, Adaptive filter theory, Prentice Hall, 1991.

[2] H. Buchner, J. Benesty und W. Kellermann, "Multichannel frequency-domain adaptive filtering with application to acoustic echo cancellation," in J. Benesty et al., (Hrsg.), Adaptive signal Processing:Application to real-world problems, Springer-Verlag, Berlin/Heidelberg, 2003.

[3] S. Spors und H. Buchner, "Multichannel transform-domain adaptive filtering: A twostage approach and illustration for acoustic echo cancellation," in 11th International Workshop on Acoustic Echo and Noise Control (IWAENC), 2008.

[4] J. Benesty, D. Morgan, und M. Sondhi, "A better understanding and an improved solution to the specific problems of stereophonic acoustic echo cancellation," IEEE Transactions on Speech and Audio Processing, vol. 6, 1998, S. 156-165.

[5] J. Herre, H. Buchner, und W. Kellermann, "Acoustic Echo Cancellation for Surround Sound using Perceptually Motivated Convergence Enhancement," Proc. IEEE International Conference on Acoustics, Speech and Signal Processing ICASSP 2007, 2007, S. I-17-I-20.

[6] T.W. Abhayapala und Y.J. Wu, "Spatial Soundfield Reproduction with Zones of Quiet," Audio Engineering Society Convention 127, 2009.

[7] J. Ahrens und S. Spors, "Sound Field Reproduction Using Planar and Linear Arrays of Loudspeakers," Audio, Speech, and Language Processing, IEEE Transactions on, accepted, 2010.

[8] J.-W. Choi and Y.-H. Kim, "Generation of an acoustically bright zone with an illuminated region using multiple sources," Journal of the Acoustic Society of America, vol. 111, no. 4, pp. 1695-1700, April 2002.

[9] S. Spors and J. Ahrens, "Local sound reproduction by virtual secondary sources", In AES 40th International Conference on Spatial Audio, Tokyo, Japan, October 2010. Audio Engineering Society (AES).

[10] E. G. Williams, "Fourier acoustics: sound radiation and nearfield acoustical holography", Academic Press, 1999

**Patentansprüche**

1. Verfahren zum Vermeiden eines akustischen Echos bei Vollduplexsystemen mit einem vielkanaligen Audiowiedergabesystem, mit:

Definieren einer Mischmatrix, die Quellensignale aus einem fernen Raum (1) auf bestimmte Lautsprechersignale derart abbildet, dass ein Wellenfeld in einem nahen Raum (2) erzeugt wird, wobei das Wellenfeld in mindestens einer bestimmten Zone (8) und/oder mindestens einer bestimmten Richtung im nahen Raum (2) unterdrückt wird, und
Anordnen mindestens eines Aufnahmesystems (22) in der bestimmten Zone (8) und/oder der bestimmten Richtung,
wobei das Audiowiedergabesystem eine Anordnung mit vielen Lautsprechern (21) aufweist und mittels der Mischmatrix die bestimmten Lautsprechersignale derart abgebildet werden, dass das erzeugte Wellenfeld in der bestimmten Zone (8) und/oder der bestimmten Richtung unterdrückt wird,
wobei das vielkanalige Audiowiedergabesystem eine räumliche Aliasingfrequenz aufweist, und die Quellensignale bandbegrenzt werden und/oder die Pfade der Lautsprechersignale zu dem Aufnahmesystem (22) identifiziert werden, wobei die Mischmatrix so definiert wird, dass die Spektralanteile der Quellensignale unterhalb der räumlichen Aliasingfrequenz in der bestimmten Zone (8) und/oder der bestimmten Richtung unterdrückt werden.

2. Verfahren nach Anspruch 1, wobei die Mischmatrix so definiert wird, dass das erzeugte Wellenfeld in der bestimmten Zone (8) und/oder der bestimmten Richtung Nullstellen aufweist.

3. Verfahren nach Anspruch 2, bei dem die Nullstellen über einen analytischen Ausdruck für ein Wunschwellenfeld bestimmt werden.

4. Verfahren nach Anspruch 2, bei dem die Nullstellen über ein numerisches Verfahren bestimmt werden, wobei vorzugsweise das numerische Verfahren der Nulllenkungsmethode oder der akustischen Kontraststeuerung entspricht.

5. Verfahren nach Anspruch 2, bei dem die Nullstellen über fokussierte Quellensignale bestimmt werden.

6. Verfahren nach einem der Ansprüche 1 bis 5, bei dem die Spektralanteile der Quellensignale oberhalb der räumlichen Alisasingfrequenz mit einem Verfahren zur mehrkanaligen Echokompensation verarbeitet werden.

7. Verfahren nach einem der Ansprüche 1 bis 6, bei dem die Lautsprechersignale oberhalb der räumlichen Alisasingfrequenz mittels Phasenmodulation dekorreliert werden.

8. Vorrichtung zum Vermeiden eines akustischen Echos bei Vollduplexsystemen insbesondere mit einem Verfahren nach einem der Ansprüche 1 bis 7 mit:

einem vielkanaligen Audiowiedergabesystem, einer Vorverarbeitungseinrichtung (4), mit der eine Mischmatrix definierbar ist, die Quellensignale aus einem fernen Raum (1) auf bestimmte Lautsprechersignale derart abbildet, dass ein Wellenfeld in einem nahen Raum (2) erzeugt wird, wobei das Wellenfeld in mindestens einer bestimmten Zone (8) und/oder mindestens einer bestimmten Richtung im nahen Raum (2) unterdrückt wird, und
mindestens einem Aufnahmesystem (22), das in der bestimmten Zone (8) und/oder der bestimmten Richtung angeordnet ist,
wobei das Audiowiedergabesystem eine Anordnung mit vielen Lautsprechern (21) aufweist und mittels der Vorverarbeitungseinrichtung (4) die bestimmten Lautsprechersignale derart abgebildet werden, dass das erzeugte Wellenfeld in der bestimmten Zone (8) und/oder der bestimmten Richtung unterdrückt wird, wobei das vielkanalige Audiowiedergabesystem eine räumliche Aliasingfrequenz aufweist, und mit einer Einrichtung zur Bandbegrenzung der Quellensignale und/oder einer Einrichtung zum Identifizieren der Pfade der Lautsprechersignale zu dem Aufnahmesystem (22), wobei die Vorverarbeitungseinrichtung (4) so ausgestaltet ist, dass die Mischmatrix so definierbar ist, dass die Spektralanteile der Quellensignale unterhalb der räumlichen Aliasingfrequenz in der bestimmten Zone (8) und/oder der bestimmten Richtung unterdrückt werden.

9. Vorrichtung nach Anspruch 8, bei dem die Vorverarbeitungseinrichtung (4) derart ausgestaltet ist, dass die Mischmatrix so definierbar ist, dass das erzeugte Wellenfeld in der bestimmten Zone (8) und/oder der bestimmten Richtung Nullstellen aufweist, wobei die Nullstellen vorzugsweise mit einem Verfahren gemäß einem der Ansprüche 5 bis 7 bestimmt werden.

10. Vorrichtung nach einem der Ansprüche 8 und 9, mit einer Einrichtung zur mehrkanaligen Echokompensation (6), mit der die Spektralanteile der Quellensignale oberhalb der räumlichen Alisasingfrequenz verarbeitet werden.

11. Vorrichtung nach einem der Ansprüche 8 bis 10, mit einer Einrichtung zum Dekorrelieren der Lautsprechersignale oberhalb der räumlichen Aliasingfrequenz mittels Phasenmodulation (5).

## Claims

1. A method for preventing an acoustic echo in full duplex systems comprising a multi-channel audio reproducing system, comprising:

   defining a mixing matrix which maps source signals from a distant space (1) to specific loudspeaker signals in such a manner that a wave field is generated in a near space (2), wherein the wave field is suppressed in at least a specific zone (8) and/or a specific direction in the near space (2), and
   arranging at least one recording system (22) in the specific zone (8) and/or the specific direction,
   wherein the audio reproducing system comprises an arrangement with a plurality of loudspeakers (21) and the specific loudspeaker signals are mapped by means of the mixing matrix in such a manner that the generated wave field is suppressed in the specific zone (8) and/or the specific direction,
   wherein the multi-channel audio reproducing system comprises a spatial aliasing frequency, and
   the source signals are band-limited and/or the paths of the loudspeaker signals to the recording system (22) are identified,
   wherein the mixing matrix is defined such that the spectral parts of the source signals below the spatial aliasing frequency are suppressed in the specific zone (8) and/or the specific direction.

2. The method according to claim 1, wherein the mixing matrix is defined such that the generated wave field comprises zeros in the specific zone (8) and/or the specific direction.

3. The method according to claim 2, wherein the zeros are determined by means of an analytical expression for a desired wave field.

4. The method according to claim 2, wherein the zeros are determined by means of a numeric method, wherein preferably the numeric method corresponds to the zero control method or acoustic contrast control.

5. The method according to claim 2, wherein the zeros are determined by means of focussed source signals.

6. The method according to any one of claims 1 to 5, wherein the spectral parts of the source signals are processed above the spatial aliasing frequency by means of a method for multi-channel echo compensation.

7. The method according to any one of claims 1 to 6, wherein the loudspeaker signals are de-correlated above the spatial aliasing frequency by means of phase modulation.

8. A device for avoiding an acoustic echo in full duplex systems in particular by means of a method according to any one of claims 1 to 7, comprising:

   a multi-channel audio reproducing system,
   a pre-processing means (4) by means of which a mixing matrix is definable, which maps source signals from a distant space (1) to specific loudspeaker signals in such a manner that a wave field is generated in a near space (2), wherein the wave field is suppressed in at least a specific zone (8) and/or at least a specific direction in the near space (2), and
   at least one recording system (22) which is arranged in the specific zone (8) and/or the specific direction,
   wherein the audio reproducing system comprises an arrangement with a plurality of loudspeakers (21) and the specific loudspeaker signals are mapped by means of the pre-processing means (4) in such a manner that the generated wave field is suppressed in the specific zone (8) and/or the specific direction,
   wherein the multi-channel audio reproducing system comprises a spatial aliasing frequency, and comprises a means for band-limitation of the source signals and/or a means for identifying the paths of the loudspeaker signals to the recording system (22), wherein the pre-processing means (4) is configured such that the mixing matrix is definable such that the spectral parts of the source signals below the spatial aliasing frequency are suppressed in the specific zone (8) and/or the specific direction.

9. The device according to claim 8, wherein the pre-processing means (4) is configured such that the mixing matrix is definable such that the generated wave field comprises zeros in the specific zone (8) and/or the specific direction, wherein the zeros are preferably determined by means of a method according to any one of claims 5 to 7.

10. The device according to any one of claims 8 and 9, comprising a means for multi-channel echo compensation (6) by means of which the spectral parts of the source signals above the spatial aliasing frequency are processed.

11. The device according to any one of claims 8 to 10, comprising a means for de-correlating the loudspeaker signals above the spatial aliasing frequency by means of phase modulation (5).

## Revendications

1. Procédé de suppression d'un écho acoustique dans des systèmes Full-Duplex ayant un système de reproduction audio à canaux multiples, comprenant :

   la définition d'une matrice de mélange formant des signaux sources à partir d'un lieu distant (1) vers des signaux de haut-parleur définis, de manière à générer un champ d'ondes dans un lieu proche (2), ledit champ d'ondes étant supprimé dans au moins une zone (8) déterminée et/ou au moins une direction déterminée dans le lieu proche (2), et
   la disposition d'au moins un système d'enregistrement (22) dans la zone (8) déterminée et/ou la direction déterminée,
   le système de reproduction audio présentant un agencement de plusieurs haut-parleurs (21) et les signaux de haut-parleur définis étant formés au moyen de la matrice de mélange de manière à supprimer le champ d'ondes généré dans la zone (8) déterminée et/ou la direction déterminée,
   le système de reproduction audio à canaux multiples ayant une fréquence spatiale de crénelage, et les signaux sources étant limités dans leur largeur de bande et/ou les trajets des signaux de haut-parleur vers le système d'enregistrement (22) étant identifiés, la matrice de mélange étant définie de manière à supprimer les composantes spectrales des signaux sources inférieures à la fréquence spatiale de crénelage dans la zone (8) déterminée et/ou la direction déterminée.

2. Procédé selon la revendication 1, où la matrice de mélange est définie de telle manière que le champ d'ondes généré ait des valeurs nulles dans la zone (8) déterminée et/ou la direction déterminée.

3. Procédé selon la revendication 2, où les valeurs nulles sont déterminées au moyen d'une expression analytique pour un champ d'ondes souhaité.

4. Procédé selon la revendication 2, où les valeurs nulles sont déterminées au moyen d'un procédé numérique, ledit procédé numérique correspondant préférentiellement à la méthode d'orientation de zéro ou à la commande de contraste acoustique.

5. Procédé selon la revendication 2, où les valeurs nulles sont déterminées au moyen de signaux sources focalisés.

6. Procédé selon l'une des revendications 1 à 5, où les composantes spectrales des signaux sources supérieures à la fréquence spatiale de crénelage sont traitées par un procédé de compensation d'écho à plusieurs canaux.

7. Procédé selon l'une des revendications 1 à 6, où les signaux de haut-parleur supérieurs à la fréquence spatiale de crénelage sont décorrélés par modulation de phase.

8. Dispositif pour la suppression d'un écho acoustique dans des systèmes Full-Duplex, en particulier au moyen d'un procédé selon l'une des revendications 1 à 7, comprenant :

   un système de reproduction audio à canaux multiples,
   un dispositif de prétraitement (4), au moyen duquel une matrice de mélange est définissable, laquelle forme des signaux sources à partir d'un lieu distant (1) vers des signaux de haut-parleur définis, de manière à générer un champ d'ondes dans un lieu proche (2), ledit champ d'ondes étant supprimé dans au moins une zone (8) déterminée et/ou au moins une direction déterminée dans le lieu proche (2), et
   au moins un système d'enregistrement (22), disposé dans la zone (8) déterminée et/ou la direction déterminée,
   le système de reproduction audio présentant un agencement de plusieurs haut-parleurs (21) et les signaux de haut-parleur définis étant formés au moyen du dispositif de prétraitement (4) de manière à supprimer le champ d'ondes généré dans la zone (8) déterminée et/ou la direction déterminée,
   le système de reproduction audio à canaux multiples ayant une fréquence spatiale de crénelage, et pourvu d'un dispositif de limitation de largeur de bande des signaux sources et/ou d'un dispositif d'identification des trajets des signaux de haut-parleur vers le système d'enregistrement (22), le dispositif de prétraitement (4) étant configuré pour définir la matrice de mélange de manière à supprimer les composantes spectrales des signaux sources inférieures à la fréquence spatiale de crénelage dans la zone (8) déterminée et/ou la direction déterminée.

9. Dispositif selon la revendication 8, où le dispositif de prétraitement (4) est configuré pour définir la matrice de mélange de telle manière que le champ d'ondes généré ait des valeurs nulles dans la zone (8) déterminée et/ou la direction déterminée, les valeurs nulles étant préférentiellement déterminées au moyen d'un procédé selon l'une des revendications 5 à 7.

10. Dispositif selon la revendication 8 ou la revendication 9, avec un dispositif pour la compensation d'écho à plusieurs canaux (6), au moyen duquel sont traitées les composantes spectrales des signaux sources supérieures à la fréquence spatiale de crénelage.

11. Dispositif selon l'une des revendications 8 à 10, avec un dispositif pour la décorrélation par modulation de phase (5) des signaux de haut-parleur supérieurs à la fréquence spatiale de crénelage.

Fig. 1

Fig. 2

**IN DER BESCHREIBUNG AUFGEFÜHRTE DOKUMENTE**

**In der Beschreibung aufgeführte Patentdokumente**

- WO 0072567 A1
- WO 9953673 A1
- EP 1845699 A1


**In der Beschreibung aufgeführte Nicht-Patentliteratur**

- **S. HAYKIN.** Adaptive filter theory. Prentice Hall, 1991
- Multichannel frequency-domain adaptive filtering with application to acoustic echo cancellation. **H. BUCHNER ; J. BENESTY ; W. KELLERMANN ; J. BENESTY et al.** Adaptive signal Processing:Application to real-world problems. Springer-Verlag, 2003
- **S. SPORS ; H. BUCHNER.** Multichannel transform-domain adaptive filtering: A twostage approach and illustration for acoustic echo cancellation. *11th International Workshop on Acoustic Echo and Noise Control (IWAENC),* 2008
- **J. BENESTY ; D. MORGAN ; M. SONDHI.** A better understanding and an improved solution to the specific problems of stereophonic acoustic echo cancellation. *IEEE Transactions on Speech and Audio Processing,* 1998, vol. 6, 156-165
- **J. HERRE ; H. BUCHNER ; W. KELLERMANN.** Acoustic Echo Cancellation for Surround Sound using Perceptually Motivated Convergence Enhancement. *Proc. IEEE International Conference on Acoustics, Speech and Signal Processing ICASSP 2007,* 2007, I-17-I-20
- **T.W. ABHAYAPALA ; Y.J. WU.** Spatial Soundfield Reproduction with Zones of Quiet. *Audio Engineering Society Convention,* 2009, vol. 127
- **J. AHRENS ; S. SPORS.** Sound Field Reproduction Using Planar and Linear Arrays of Loudspeakers. *Audio, Speech, and Language Processing, IEEE Transactions on,* 2010
- **J.-W. CHOI ; Y.-H. KIM.** Generation of an acoustically bright zone with an illuminated region using multiple sources. *Journal of the Acoustic Society of America,* April 2002, vol. 111 (4), 1695-1700
- Local sound reproduction by virtual secondary sources. **S. SPORS ; J. AHRENS.** In AES 40th International Conference on Spatial Audio. Audio Engineering Society (AES), Oktober 2010
- **E. G. WILLIAMS.** Fourier acoustics: sound radiation and nearfield acoustical holography. Academic Press, 1999